Europäisches Patentamt

European Patent Office

Office européen des brevets

(19)

(11) Publication number: **0 041 331**
**B1**

(12) # EUROPEAN PATENT SPECIFICATION

(45) Date of publication of patent specification: 07.08.85

(21) Application number: 81302172.2

(22) Date of filing: 15.05.81

(51) Int. Cl.⁴: **B 29 C 49/64,** B 29 C 49/38

(54) **Apparatus for cooling a transfer mandrel.**

(30) Priority: 24.05.80 JP 71826/80
27.06.80 JP 86436/80

(43) Date of publication of application:
09.12.81 Bulletin 81/49

(45) Publication of the grant of the patent:
07.08.85 Bulletin 85/32

(84) Designated Contracting States:
DE FR GB NL

(56) References cited:
CH-A- 320 142
FR-A-2 403 878
FR-A-2 413 196

(73) Proprietor: **TOYO SEIKAN KAISHA LIMITED**
**3-1, Uchisaiwai-cho 1-chome Chiyoda-ku**
**Tokyo (JP)**

(72) Inventor: **Kishida, Nobuhiro**
**41-25 Kitaminecho Oota-ku**
**Tokyo (JP)**
Inventor: **Shishido, Kunihiro**
**5013-50 Aza-terada Ooaza-shobu Shobu-machi**
**Minamisaitama-gun Saitama Prefecture (JP)**
Inventor: **Haryu, Satoshi**
**5013-50 Aza-terada Ooaza-shobu Shobu-machi**
**Minamisaitama-gun Saitama Prefecture (JP)**
Inventor: **Hamada, Kiyoichi**
**5013-50 Aza-terada Ooaza-shobu Shobu-machi**
**Minamisaitama-gun Saitama Prefecture (JP)**

(74) Representative: **Parker, Jeffrey et al**
**Frank B. Dehn & Co. Imperial House 15-19**
**Kingsway**
**London, WC2B 6UZ (GB)**

Courier Press, Leamington Spa, England.

# Description

The present invention relates to an apparatus for cooling a transfer mandrel.

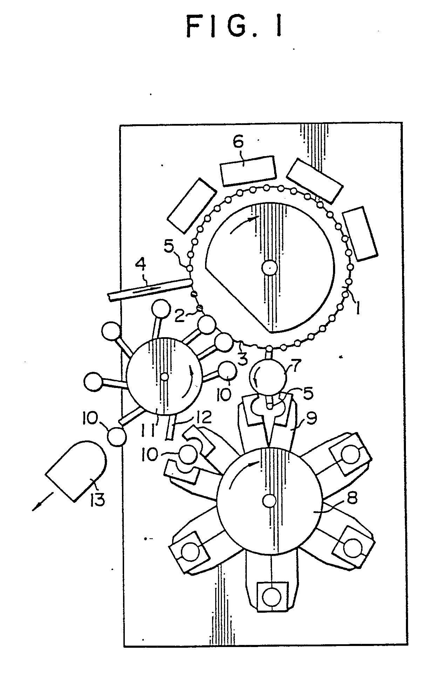

A draw-blow molding apparatus for making thermoplastic resin hollow articles, of a type as illustrated in Figure 1 is proposed in Japanese Laid-Open Patent Publication No. 93062/1979 or U.S. Patent Specification No. 4,214,860. In equispaced relationship along the periphery of a rotary heating table 1 a plurality of supporting portions 3 for transfer mandrels 2 are provided as indicated in Figure 1. A parison 5 having a bottom is conveyed in the arrow direction by means of a conveyor 4, mounted on the top portion of the transfer mandrel 2 at the leading end portion of the conveyor 4, and heated to a draw-blowable temperature by means of an infra-red radiation heating means 6 while transferred in the arrow direction along with the rotary heating table 1. Subsequently the parison 5 riding on the transfer mandrel 2 is fed by means of a transfer table 7 to a draw-blow molding mold 9 provided on a molding table 8 rotating in the arrow direction, and molded thereon to a hollow article 10 having a predetermined shape. The hollow article 10, while it is transferred to an arm 12 provided on a rotary discharge table 11 together with the transfer mandrel 2 and travels in the arrow direction, is separated from the transfer mandrel 2 and delivered to the next step via a discharge chute 13, while the transfer mandrel 2 is engaged again with the supporting portion 3 on the rotary heating table 1.

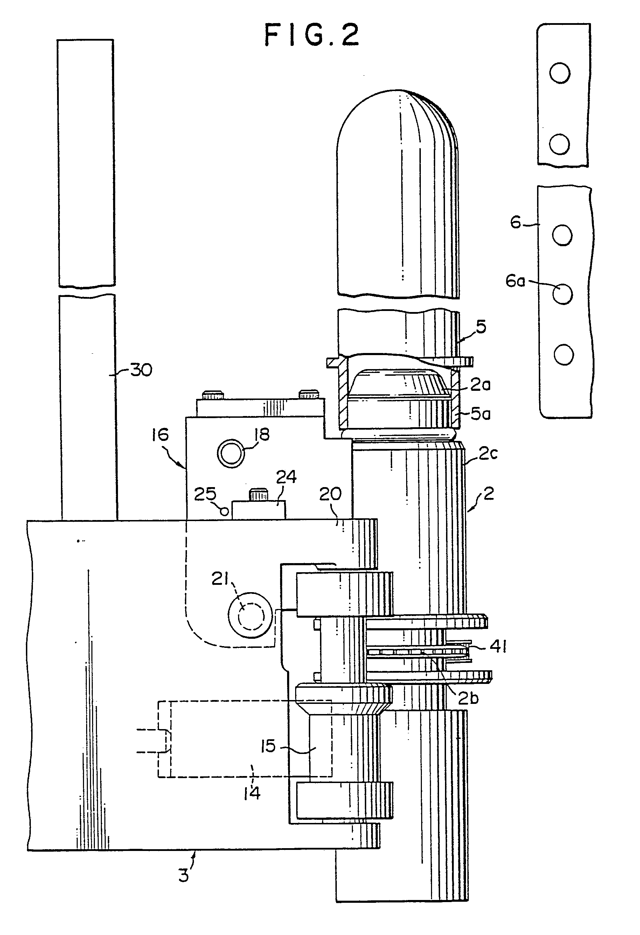

As described hereinabove, the transfer mandrel 2 is circulated repeatedly through all the stations or steps, and during its circulation the temperature of the top portion 2a (refer to Figure 2) thereof and its vicinity increases gradually and sometimes rises over the glass transition point of the resin forming the parison 5 (e.g. linear polyester resins such as polyethylene terephthalate) by radiation heating from a reflection panel 30 (refer to Figure 2) and heat conduction from the heated parison or the like, although the device is designed so that the transfer mandrel (2) is not heated directly by the infra-red radiation heating means 6.

The above-mentioned temperature rise causes a temperature rise at the open end portion 5a of the parison 5 in contact with the top portion 2a of the transfer mandrel 2 as not enough heat can be conducted from open end portion 5a of the parison 5 to the top portion 2a of the transfer mandrel 2. This poses problems such as the deformation of the open end portion 5a during the heating step and the imperfect sealing between the open end portion 5a and the transfer mandrel 2, which leads to a poorly formed article being obtained during the blow molding or draw-blow molding step. Further, since the deformation of the open end portion 5a and the imperfect sealing described above increase with the heat capacity of the infra-red radiation heating means 6, infra-red radiation heating means of a relatively small heat capacity has to be employed so as to alleviate the above-mentioned problems. This brings about the disadvantage that the peripheral velocity of the rotary heating table 1 must be reduced so as to ensure sufficient heating of the parison 5, thereby leading to low productivity.

According to the invention, there is provided apparatus for cooling a transfer mandrel on whose top portion a thermoplastic resin parison is to be mounted in order to be heated, which mandrel is in use rotatably engaged with the peripheral portion of a rotary table adapted to rotate past a heating means, the apparatus being located at the said peripheral portion of said rotary table and comprising a cooling block having a cavity for flow of cooling water and a concave surface having a profile conforming to a cylindrical portion of said transfer mandrel, means permitting the positioning of the cooling block so that said concave surface thereof may be brought into face-to-face contact with the said cylindrical portion of the mandrel, and a spring which pushes against a surface of the cooling block to urge said concave surface into face-to-face contact with the mandrel, whereby the said cylindrical portion of the mandrel is cooled so as to restrict heating of said top portion thereof.

The apparatus may be used for cooling a transfer mandrel used in the heating step of a thermoplastic resin parison for blow molding or draw-blow molding of a hollow article, so as to prevent the transfer mandrel on which the parison is mounted from rising in temperature. In this embodiment of the invention, the open end portion of the parison riding on the transfer mandrel is prevented from being deformed thermally and the sealing between this open end portion and the transfer mandrel is prevented from being damaged. Thus the apparatus enables a high heating rate of the parison and a high productivity of the hollow article.

In a preferred embodiment of the invention, the heating means is an infra-red radiation heating device such as an infra-red tube heater. Preferably the transfer mandrel has a sprocket and is rotated by means of a chain which is engaged with the sprocket and rotates in the opposite direction to the rotating direction of the rotary table, whereby the transfer mandrel can be rotated with a uniform velocity without slippage and circumferentially uniform cooling of the transfer mandrel and moreover circumferentially uniform heating of the parison can be effected.

Certain embodiments of the invention will be described by way of example and with reference to the accompanying drawings in which:

Figure 1 is a plan view illustrating an example of a hollow article molding machine to which the apparatus according to this invention is applied;

Figure 2 is a front view of a first embodiment of the apparatus according to this invention;

Figure 3 is a plan view of the apparatus shown in Figure 2;

Figure 4 is a vertical sectional view taken along line IV—IV of Figure 3;

Figure 5 is a front view of a second embodiment of the apparatus according to this invention;

Figure 6 is a plan view of the apparatus shown in Figure 5;

Figure 7 is a vertical sectional view taken along line VII—VII of Figure 6;

Figure 8 is a schematic plan view illustrating an example of a means for rotating the transfer mandrel applicable to the apparatus according to the invention.

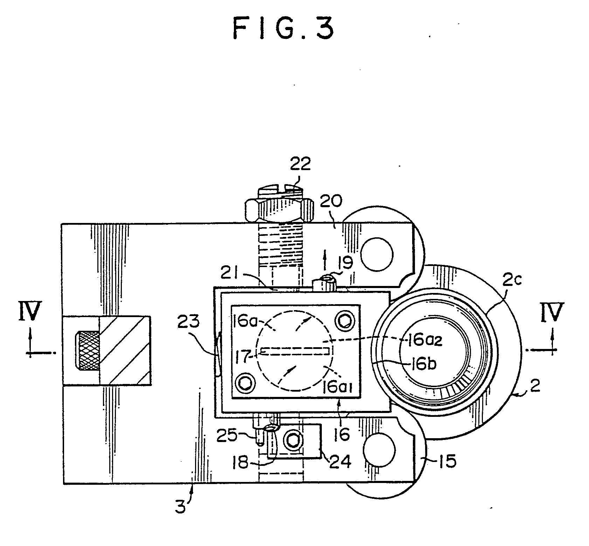

Referring to Figures 2, 3 and 4, a transfer mandrel 2 is engaged with a mandrel supporting portion 3 of a rotary table 1 which is indicated in Figure 1. The mandrel supporting portion 3 is provided with a permanent magnet 14, a pair of rollers 15 disposed at both sides of the tip portion of the permanent magnet 14, and a cooling block 16 for cooling the transfer mandrel 2 to prevent the temperature rise thereof.

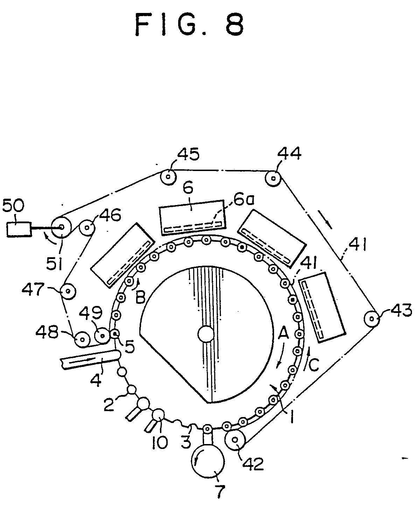

The permanent magnet 14 functions to attract the transfer mandrel 2 formed of a ferromagnetic material (e.g. ferromagnetic stainless steel) thereto and allow it to be engaged with the rollers 15. The transfer mandrel 2 is rotated together with the rollers 15 by an endless chain 41 (refer to Figure 8) which is engaged with a sprocket 2b secured to the transfer mandrel 2, so that the parison 5 may be heated uniformly around its circumference by infra-red tube heaters 6a. The driving means for the endless chain 41 will be described in detail hereinafter.

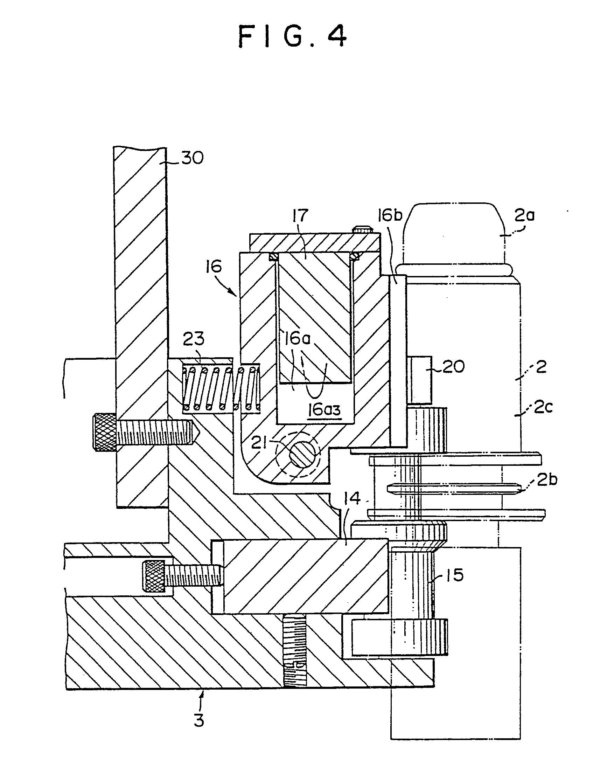

The cooling block 16 is disposed above the permanent magnet 14 to face the upper cylindrical portion 2c of the transfer mandrel 2. The cooling block 16, which is preferably formed from a metal or alloy of high heat conductivity such as aluminium or its alloys, is provided with the cavity 16a through which cooling water flows. The cavity 16a is divided into an entrance portion $16a_1$ and an exit portion $16a_2$ by a partition 17 extending in the diametrical direction such that portions $16a_1$ and $16a_2$ communicate with each other through a portion $16a_3$ beneath the partition 17, as best shown in Figure 4. The cooling water flows in the arrow direction from an entrance pipe 18 through the entrance portion $16a_1$, the portion $16a_3$, the exit portion $16a_2$ and an exit pipe 19 so as to cool the cooling block 16.

The concave surface 16b of the cooling block 16 has a profile conforming to and of the same curvature radius as that of the upper cylindrical portion 2c of the transfer mandrel 2 so as to be able to be in full face-to-face contact with the outer peripheral surface of the upper cylindrical portion 2c. It is desirable that the concave surface 16b is coated with a smooth wear-proof film such as a hard chromium plated layer, or a film of high heat-conductivity such as silver or its alloy plated layer.

The cooling block 16 is carried rotatably on a generally U-shaped frame 20 with an eccentric pin 21, whose one end portion consists of a threaded portion 22. The cooling block 16 can be slightly moved in the horizontal and vertical directions by revolving the threaded portion 22, and thus by adjusting the threaded portion 22 the concave surface 16b can be fixed to a position where it can be in face-to-face contact with the outer peripheral surface of the upper cylindrical portion 2c of the transfer mandrel 2.

A coil spring 23 is provided behind the cooling block 16, so that the cooling block 16 may be pushed forwardly at all times, and thus the concave surface 16b may push against the outer peripheral surface of the upper cylindrical portion 2c so as to ensure face-to-face contact between both surfaces. The pushing force of the coil spring 23 is set to a smaller value than the attracting force of the permanent magnet 14 on the transfer mandrel 2.

A stopper 24 is provided on the upper surface of the frame 20. When the transfer mandrel 2 is not engaged with the mandrel supporting portion 3, the stopper 24 is engaged with a stopper pin 25 fixed to the cooling block 16, so that the cooling block 16 may not be tilted forwardly over a predetermined position.

The afore-described apparatus is operated in the following way.

Before the transfer mandrel 2 is engaged with the mandrel supporting portion 3, the cooling block 16 is tilted forwardly about the eccentric pin 21 by the action of the coil spring 23 to the position where the stopper 24 is engaged with the stopper pin 25.

When the transfer mandrel 2 is conveyed to the mandrel supporting portion 3 from the arm 12 of the rotary discharge table 11, the transfer mandrel 2 is engaged with the rollers 15 by the attracting force of the permanent magnet 14, and simultaneously the upper cylindrical portion 2 returns the concave surface 16b of the cooling block 16 to a vertical position, whereby the upper cylindrical portion 2c is brought into face-to-face contact with the concave surface 16b. Concurrently, the transfer mandrel 2 is rotated by the endless chain 41, and the upper cylindrical portion 2c is cooled by the concave surface 16b.

The parison 5 mounted on the top portion 2a of the transfer mandrel 2 is heated by infra-red radiation heating means 6, and simultaneously the top portion 2 and its vicinity are also heated to some degree. However, the temperature rise at the top portion 2a and its vicinity is prevented by the above-mentioned cooling effect. The transfer mandrel 2, when it has reached the transfer table 7, is removed from the supporting portion 3 by a means not shown, and delivered to the molding table 8 via the transfer table 7.

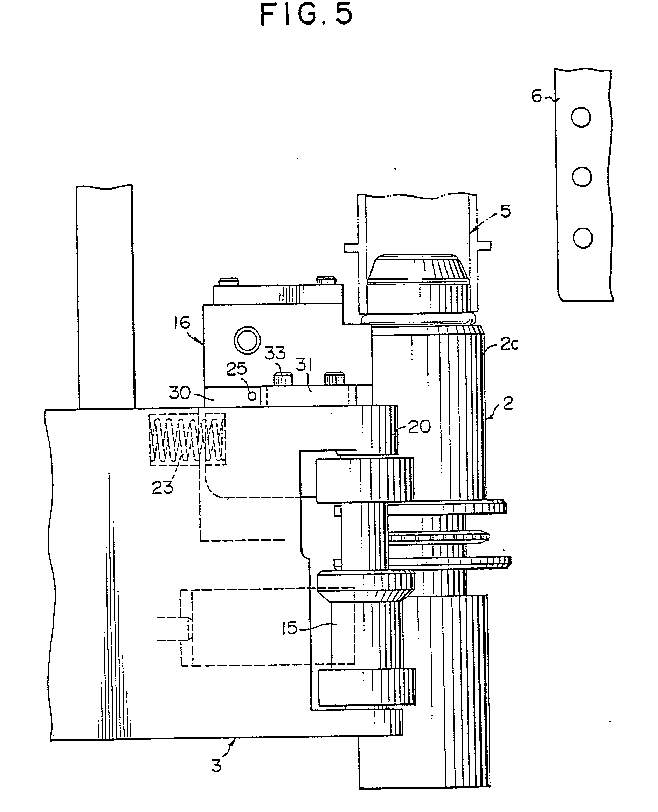

Figures 5, 6 and 7 illustrate another embodiment of this invention, wherein a sliding mechanism is used for adjusting the position of the cooling block 16 instead of the eccentric pin 21. On both side walls of the cooling block 16 there are provided horizontal grooves 30 which extend adjacent the upper surface of the frame 20 and parallel to the pushing direction of the coil spring 23, and are adapted to slide along guide blocks 31 fixed to the upper surface of the frame 20. The fixed position of the guide blocks 31 is adjusted with slots 32 and screws 33.

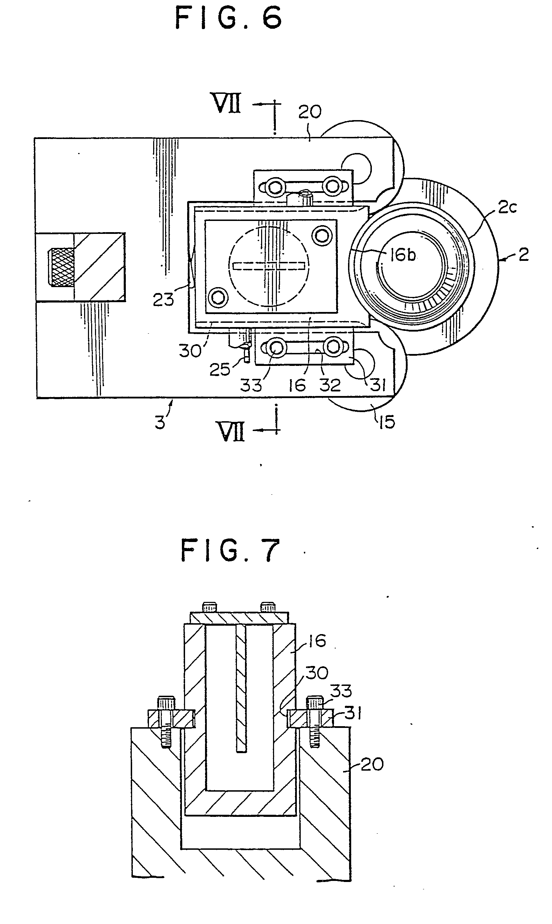

When the transfer mandrel 2 is not engaged with the mandrel supporting portion 3, the cooling block 16 is caused to slide along the guide block 31 towards the right-hand side of Figure 6 by the pushing action of the coil spring 23 to a position where the stopper pin 25 is engaged with the guide block 31. When the transfer mandrel 2 is engaged with the rollers 15, the concave surface 16b of the cooling block is brought into contact with the upper cylindrical portion 2c of the transfer mandrel 2, and simultaneously the cooling block 16 retracts to the left-hand-side of Figure 6, as a result of which the concave surface 16b pushes the upper cylindrical portion 2c with the pushing action of the coil spring 23 to ensure face-to-face contact between the two.

Thus both embodiments of the invention have the advantage that the revolving transfer mandrel can be fully cooled by a large heat transmission, since the upper cylindrical portion of the transfer mandrel is brought by the pushing action of the spring into face-to-face contact with the concave surface of the cooling block which is cooled with cooling water flowing therein. Furthermore, there is the advantage that this contact can be ensured easily by the adjustment of the eccentric pin in a simple structure, or by the sliding mechanism.

Means for rotating the transfer mandrel 2 will be described hereinbelow.

Referring to Figure 8, the endless chain 41 which is engaged with the sprocket 2b (refer to Figure 2) of the transfer mandrel 2 at the outer extremity thereof is arranged along guide sprockets 42, 43, 44, 45, 46, 47, 48 and 49 and a drive sprocket 51 which is driven by a variable speed motor 50 such that it travels at a predetermined speed in the opposite direction, shown by the arrow C, to the rotating direction, shown by the arrow A, of the rotary heating table 1. This occurs along the peripheral portion of the rotary heating table 1 at least in front of the infra-red radiation heating means 6, that is, along the arc travelled between the conveyor 4 and the transfer table 7.

The use of the endless chain 41 has the advantage that there can be completely prevented slippage between the transfer mandrel and a fixed rope such as seen in the conventional method disclosed in U.S. Patent Specification No. 4,214,860 or Japanese Laid-Open Patent Publication No. 93062/1979 which tends to occur particularly when using the cooling block 16 owing to the frictional resistance thereof. Thus the fluctuation of rotation in the direction shown by the arrow B of the transfer mandrel 2 and the parison 5 is completely eliminated, as a result of which a uniform temperature distribution around the circumference of the parison 5 is ensured.

Furthermore, it is possible to allow the number of rotations of the transfer mandrel 2 made during its passage before each infra-red radiation heating means 6 to be an integral number such as three times or four times by controlling the travelling speed of the endless chain 41, this being a relatively slow speed. Thus non-uniform temperature distribution around the circumference of the parison 5 can be prevented, whereas in the conventional method using a fixed rope the above number of rotations tends to be a non-integral number such as 3.4 times, which tends to lead to a non-uniform temperature distribution around the circumference of the parison.

It is also easy to increase the above-mentioned number of rotations to e.g. 20 times by raising slightly the speed of the endless chain 41, since the endless chain 41 travels in the opposite direction to the rotating direction of the rotary heating table 1. With such a large number of rotations, uniform heating around the circumference of the parison 5 is ensured even if the number of rotations is not an integral number.

Such uniform heating around the circumference of the parison results in the circumferentially uniform thickness of the side wall portion of a blow molded hollow article, particularly a drawn and blown hollow article. This effect is to be noted particularly in cases where the fluctuation of the temperature around the circumference of the parison is required to be within ±5°C so as to achieve the commercially allowable circumferentially uniform thickness of the side wall portion of bi-axially drawn and blown hollow articles such as polyethylene terephthalate containers used for carbonated drinks, soy bean sauce and salad oil, or the like.

The rate of rotation of the rotary heating table 1 is often changed according to the type of product, but since the speed of the endless chain is variable, a circumferentially uniform temperature distribution in the parison and thus a circumferentially uniform thickness of the side wall portion of the product are ensured at all times in spite of the above change of the production speed.

**Claims**

1. Apparatus for cooling a transfer mandrel (2) on whose top portion (2a) a thermoplastic resin parison (5) is to be mounted in order to be heated, which mandrel is in use rotatably engaged with the peripheral portion of a rotary table (1) adapted to rotate past a heating means (6), the apparatus being located at the said peripheral portion of said rotary table and comprising a cooling block (16) having a cavity (16a) for flow of cooling water and a concave surface (16b) having a profile conforming to a cylindrical portion (2c) of said transfer mandrel, means (21; 30, 31) permitting the positioning of the cooling block so that said concave surface thereof may be brought into face-to-face contact with the said cylindrical portion of the mandrel, and a spring (23) which pushes against a surface of the cooling block to urge said concave surface into face-to-face contact with the mandrel, whereby the said cylindrical portion of the mandrel is cooled so as to restrict heating of said top portion thereof.

2. Apparatus as claimed in claim 1, wherein said means permitting the positioning of the cooling block (16) includes an eccentric pin (21).

3. Apparatus as claimed in claim 1, wherein said means permitting the positioning of the cooling block (16) comprises horizontal grooves (30) provided on each side of said cooling block and guide blocks (31) fixed to the upper surface of a frame (20).

4. Apparatus as claimed in claim 1, 2 or 3, wherein said heating means (6) comprises an infra-red tube heater (6a).

5. Apparatus as claimed in any of claims 1 to 4, wherein said cooling block (16) is formed of aluminium.

6. Apparatus as claimed in any of claims 1 to 4, wherein said cooling block (16) is formed of an aluminium alloy.

7. Apparatus as claimed in any of the preceding claims, wherein said concave surface (16b) is covered with a wear-proof film.

8. Apparatus as claimed in any of the preceding claims, wherein said thermoplastic resin parison (5) comprises a parison for blow molding.

9. Apparatus as claimed in any of claims 1 to 7, wherein said thermoplastic resin parison (5) comprises a parison for biaxially draw-blow molding.

10. Apparatus as claimed in claim 9, wherein said parison for bi-axially draw-blow molding is formed of a linear polyester resin.

11. Apparatus as claimed in any of the preceding claims, wherein said transfer mandrel (2) is adapted to rotate by means of a chain (41) which is engaged with a sprocket (2b) secured to said transfer mandrel and is adapted to rotate in the opposite direction to the rotating direction of said rotary table (1).

## Patentansprüche

1. Vorrichtung zum Kühlen eines Transferdornes (2), an dessen oberen Bereich (2a) ein Vorformling (5) aus thermoplastischem Kunststoffmaterial zum Zwecke der Erwärmung befestigbar ist und der im Einsatz drehbar in Eingriff mit dem Umfangsbereich eines längs einer Heizeinrichtung (6) drehbaren Drehtisches (1) steht, welche Vorrichtung am Umfangsbereich des Drehtisches angeordnet und gekennzeichnet ist durch eine Kühlblock (16) mit einer Ausnehmung (16a) zum Durchfluß von Kühlwasser und einer konkaven Fläche (16b) mit einem Profil, das einem zylindrischen Bereich (2c) des Transferdornes entspricht, eine Einrichtung (21; 30, 31), die eine Positionierung des Kühlblocks dergestalt ermöglicht, daß dessen konkave Fläche in flächenanliegender Berührung mit dem zylindrischen Bereich des Dornes bringbar ist, und eine Feder (23), die eine Fläche des Kühlblockes beaufschlagt, um die konkave Fläche in flächenmäßiger Berührung mit dem Dorn zu drücken, so daß der zylindrische Bereich des Dornes unter Einschränkung der Erwärmung des oberen Dornbereiches gekühlt wird.

2. Vorrichtung nach Anspruch 1, dadurch gekennzeichnet, daß die die Positionierung des Kühlblockes (16) ermöglichende Einrichtung einen Exzenterzapfen (21) umfaßt.

3. Vorrichtung nach Anspruch 1, dadurch gekennzeichnet, daß die die Positionierung des Kühlblockes (16) ermöglichende Einrichtung horizontale an jeder Seite des Kühlblockes vorgesehene Nuten (30) und an der oberen Fläche eines Rahmens (20) befestigte Führungsblöcke (31) umfaßt.

4. Vorrichtung nach Anspruch 1, 2 oder 3, dadurch gekennzeichnet, daß die Heizeinrichtung (6) ein Infrarot-Röhrenheizelement (6a) umfaßt.

5. Vorrichtung nach einem der Ansprüche 1 bis 4, dadurch gekennzeichnet, daß der Kühlblock (16) aus Aluminium gebildet ist.

6. Vorrichtung nach einem der Ansprüche 1 bis 4, dadurch gekennzeichnet, daß der Kühlblock (16) aus einer Aluminiumlegierung gebildet ist.

7. Vorrichtung nach einem der vorhergehenden Ansprüche, dadurch gekennzeichnet, daß die konkave Fläche (16b) mit einer verschleißfesten Folie beschichtet ist.

8. Vorrichtung nach einem der vorhergehenden Ansprüche, dadurch gekennzeichnet, daß der Vorformling (5) aus thermoplastischem Kunststoffmaterial ein Blasrohling ist.

9. Vorrichtung nach einem der Ansprüche 1 bis 7, dadurch gekennzeichnet, daß der Vorformling (5) auf thermoplastischem Kunststoffmaterial ein Rohling für biaxiales Streck-Blasformen ist.

10. Vorrichtung nach Anspruch 9, dadurch gekennzeichnet, daß der Rohling für biaxiales Streck-Blasformen aus einem linearen Polyesterharz gebildet ist.

11. Vorrichtung nach einem der vorhergehenden Ansprüche, dadurch gekennzeichnet, daß der Transferdorn (2) mittels einer Kette (41) in Drehbewegung versetzbar ist, welche in Eingriff mit einem am Transferdorn befestigten Kettenrad (2b) steht und in entgegengesetzter Richtung zur Drehrichtung des Drehtisches drehbar ist.

## Revendications

1. Appareil pour le refroidissement d'un mandrin de transfert (2) sur la partie d'extrémité (2a) duquel, une paraison (5) en résine thermoplastique doit être montée pour être chauffée, ledit mandrin étant, lors du fonctionnement, entraîné en rotation avec la partie périphérique d'une table tournante (1) adaptée pour tourner devant des moyens de chauffage (6), l'appareil étant disposé à ladite partie périphérique de ladite table tournante et comprenant un bloc de refroidissement (16) ayant une cavité (16a) pour la circulation d'eau de refroidissement et une surface concave (16b) ayant un profil correspondant à une partie cylindrique (2c) dudit mandrin de transfert, des moyens (21; 30, 31) permettant le positionnement du bloc de refroidissement de sorte que ladite surface concave de celui-ci, peut être amenée en contact face contre face avec ladite partie cylindrique du mandrin, et un ressort (23) qui exerce une poussée contre une surface du bloc de refroidissement de façon à presser ladite surface concave en contact face contre face avec le mandrin, de manière que ladite partie cylindrique du mandrin soit refroidie de façon à limiter le chauffage de ladite partie d'extrémité de celui-ci.

2. Appareil selon la revendication 1, caractérisé en ce que lesdits moyens permettant le positionnement du bloc de refroidissement (16) comprennent un ergot excentrique.

3. Appareil selon la revendication 1, caractérisé en ce que lesdits moyens permettant le positionnement du bloc de refroidissement (16) comprennent des rainures horizontales (30) prévues de chaque côté du bloc de refroidissement et des ensembles de guidage (31) fixés sur la surface supérieure d'un bâti (20).

4. Appareil selon les revendications 1, 2, ou 3, caractérisé en ce que lesdits moyens de chauffage (6) comportent un dispositif de chauffage à tube à infrarouge (6a).

5. Appareil selon l'une quelconque des revendications 1 à 4, caractérisé en ce que ledit bloc de refroidissement (16) est constitué d'aluminium.

6. Appareil selon l'une quelconque des revendications 1 à 4, caractérisé en ce que ledit bloc de refroidissement (16) est constitué d'un aliage d'aluminium.

7. Appareil selon l'une quelconque des revendications précédentes, caractérisé en ce que ladite surface concave (16b) est recouverte d'un film résistant à l'usure.

8. Appareil selon l'une quelconque des revendications précédentes, caractérisé en ce que ladit paraison en résine thermoplastique (5) est constituée d'une paraison pour le moulage par soufflage.

9. Appareil selon l'une quelconque des revendications 1 à 7, caractérisé en ce que ladite paraison en résine thermoplastique (5) est constituée par une paraison pour le moulage par extrusion-soufflage selon deux axes.

10. Appareil selon la revendication 9, caractérisé en ce que ladite paraison pour le moulage par extrusion-soufflage est formée d'une résin polyester linéaire.

11. Appareil selon l'une quelconque des revendications précédentes caractérisé en ce que ledit mandrin de transfert (2) est adapté pour tourner au moyen d'une chaîne (41) qui coopère avec une roue dentée (2b) fixée audit mandrin de transfert et adaptée pour tourner dans le sens opposé au sens de rotation de la table tournante (1).

# FIG. 1

# FIG. 2

# FIG. 3

# F I G . 4

FIG.5

0 041 331

# FIG. 6

# FIG. 7

# FIG. 8